# EUROPEAN PATENT SPECIFICATION

(11) **EP 0 578 715 B1**
(45) Date of publication and mention of the grant of the patent: **24.07.1996**
(21) Application number: 92908204.8
(22) Date of filing: 09.04.1992
(51) Int. Cl.: B60S 1/08

(54) **CONTROL SYSTEM FOR WINDSCREEN WIPING**
STEUERANORDNUNG FÜR EINE SCHEIBENWISCHANLAGE
SYSTEME DE COMMANDE POUR ESSUIE-GLACE

(30) Priority: 09.04.1991 AU 5499/91; 23.08.1991 AU 7944/91
(43) Date of publication of application: 19.01.1994
(73) Proprietor: INTROLAB PTY. LIMITED, North Manly, NSW 2100 (AU)
(72) Inventor: STANTON, Peter, Robert, North Narrabeen, NSW 2101 (AU)
(74) Representative: Flegg, Christopher Frederick
(86) International application number: AU9200156
(87) International publication number: WO9218358

(56) References cited:
- EP-A- 0 403 337
- EP-A- 0 438 633
- WO-A-91/03393
- WO-A-91/09756
- DE-A- 2 504 799
- DE-A- 3 244 767
- DE-A- 3 941 905
- DE-A- 4 101 900
- FR-A- 2 663 276
- US-A- 3 458 889
- US-A- 3 604 997
- US-A- 4 499 410
- US-A- 4 527 105

## Description

### Background Art

It is known to control windscreen wiper systems in response to measurements taken by a moisture sensing device. Typically in the prior art the moisture sensing device attempts to measure the rate of precipitation and the control attempts to initiate a wiping action once some predetermined amount of precipitation has occurred. While many such systems have been postulated, very few have apparently come into existence and those generally suffer erratic operation under at least certain conditions.

In EP-A-O 403 337 there is disclosed a windshield wiper system with a detector which functions to control the wiper system when rain falls on the detector and wherein the form and distribution of rain impinging on the detector enables an appropriate wiping speed to be triggered.

### Disclosure of Invention

It is an object of the present invention to provide a method of controlling a wiper system, once it has been actuated, so as to automatically control the rate of wiping of the windscreen in an effective manner.

According to the present invention, this object is achieved by the control means defined in independent claim 1. Embodiments of the invention are disclosed in the dependent claims.

Preferably the quantitative measure of moisture level is provided by a sensor indicating the amount of water wiped from the windscreen during at least a portion of a single wiping action of the wiper system. Most preferably the sensor indicates the width of a water wave formed by a wiper of the system at a point within and proximate an end edge of an area swept by the wiper.

In one form the method includes determining a current value of the wiping rate and a moisture value corresponding to an absolute moisture level determined during a preselected wiper action and setting a future wiping rate according to a predetermined table based on the current value and the moisture value.

In another form the method is used in a system in which the current wiping rate is set by a speed controller which responds to speed up and speed down signals by respectively increasing or decreasing the wiping rate, the method including determining a relative moisture value which is the inverse of the moisture present on the screen and comparing this value to a predetermined moisture level, determining whether the relative moisture value is equal to, greater than or less than and signalling the controller to respectively remain constant, speed down, or speed up the wiping rate. Preferably the relative moisture value further includes a discrepancy measure and any speed up or speed down signal includes a quantitative portion based on the discrepancy measure and determining the proportional change in wiping rate. Preferably the speed controller utilises an up/down counter and effects changes in the wiping rate by effecting up or down counts accordingly.

Generally, the invention relies on measurements of precipitation rate by averaging out the precipitation accumulated during a preselected wiper action, conveniently being the current (or last) sweep of the wiper blade and by using that information in conjunction with the wiping rate used for that wiping action to determine the next wiping rate. Two basic criteria can be used in finally selecting a future (or next) wiping rate. Fundamentally there is an ideal amount of moisture to be swept from the screen each wiper action, this amount relates to the level of moisture accumulated on the screen which is sufficient to hinder clear vision and for a given wiper action if this moisture level is undesirably greater or less than the ideal level the next wiping rate to be used can be set respectively faster or slower than the present rate. Also by measuring the amount of moisture swept from the screen in a single sweep, i.e. the moisture level averaged over a single wiper action, and dividing by the time lapsed since the last sweep (i.e. the current delay) the actual rate of moisture accumulation, or the absolute moisture accumulation rate as an average over that period, is calculated and a predetermined wiper rate corresponding to the calculated absolute accumulation rate can be set.

By averaging the moisture accumulation of the period of a wiping action, and by taking direct account of the current wiping rate, accurate and consistent wiper action can be obtained automatically.

Preferably the setting of the wiping rate is effected each wiping sweep of the wiping system.

### Brief Description of the Drawings

Figure 1 shows a schematic arrangement of a road vehicle windscreen wiping system incorporating the invention;
Figure 2 is a schematic circuit diagram showing one embodiment of the invention;
Figure 3 is a basic block diagram showing the operating function of a second embodiment of the invention; and
Figure 4 illustrates the basis for determining the regulation of wiping rates in accordance with predetermined optimum wiping rates for given precipitation levels.

### Best Mode of Carrying Out Invention

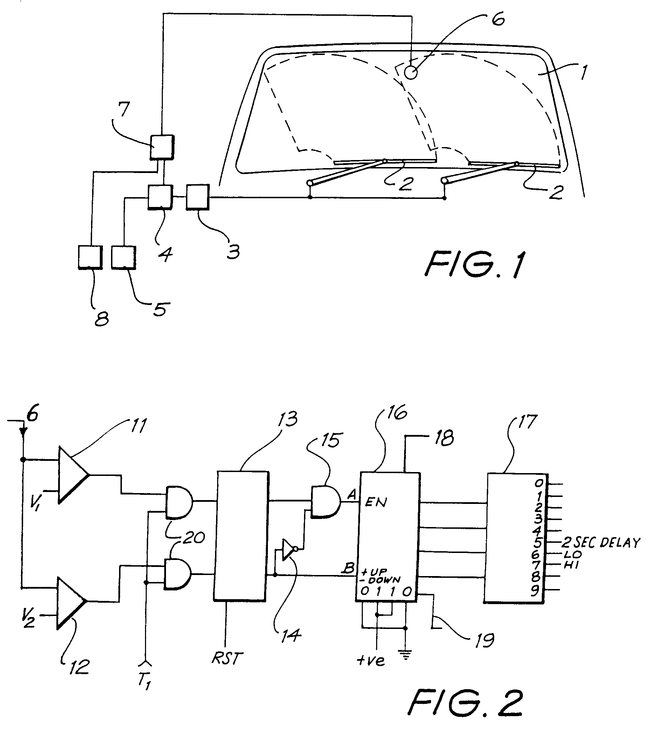

Figure 1 schematically shows the main components of a windscreen wiping system in accordance with the invention. The vehicle includes a windscreen 1, a pair of wiper blades 2, a wiper blade motor 3 and a motor controller 4 which, in the absence of the invention, is switched by the on/off control 5 in order to provide fast, slow, intermittent (fixed or variable) and off wiper blade speeds. When the vehicle is fitted with equipment according to the invention it additionally includes a moisture sensor 6 and an automatic controller 7.

When the sensor 6 and the automatic controller 7 are switched on via a momentary switch 8 windscreen wiper operation commences and the automatic controller 7 adjusts the rate of wiping by the wiper blades 2 in accordance with the amount of water detected on the windscreen. The manner of regulating the rate of wiping may be by altering the actual speed of the motor 3, or it may be by adjusting a time delay between the end of one wiping action and the beginning of the next wiping action. In either case, the rate of wiping is continually updated after each wiping action.

The sensor 6 is positioned approximately in front of the normal rearview mirror position within the vehicle, and is opposite a top end region within the area swept by one of the wiper blades 2. The moisture sensor 6 provides a signal which is proportional to the amount of water swept from the windscreen by the blade 2 during each wiping action. Other sensor positions and signal outputs can be used with suitable modifications.

One embodiment of the automatic controller 7 is shown, by schematic circuit diagram, in Figure 2. The controller 7 receives a signal from the moisture sensor 6, the signal goes to a pair of comparators 11 and 12. The signal derived from the sensor 6 is of variable voltage dependent upon the measured amount of water swept by the blade 2 during the current wiping action. The comparators 11 and 12 are also connected to preselected respective reference voltages V₁ and V₂, V₁ being a higher voltage than V₂. This enables the signal from sensor 6 at a specified time T₁ to be categorised into one of three areas i.e. greater than V₁, less than V₁ but greater than V₂, or less than V₂. These categories relates to little or no moisture, small amount of water swept by blade 2, or large amount of water swept by blade 2, respectively. The principle of operation is to adjust the wiping rate automatically, so that the signal level from sensor 6 is kept within the second category as previously described, i.e. by increasing the wiping rate, the amount of water swept by blade 2 each wiping cycle reduces, and conversely a reduction in the wiping rate will increase the amount of water swept by blade 2 each cycle. The signal voltage from sensor 6 is inversely proportional to the amount of water being swept by blade 2, i.e. a large sensor voltage represents a small amount of water and visa-versa.

Outputs from the comparators 11 and 12 lead through two AND gates 20, and thence into a latch 13. From the latch 13 signals derived from comparator 12 lead to pin B of an up/down counter 16. Signals derived from the comparator 11 lead through an AND gate 15 into pin A of the counter 16. The counter 16 is also connected to a clock 18 providing timing pulses every wiping cycle. Also, a load input signal 19 enables an initial count, binary six (0110), causing low speed to be selected on decoder 17 when the wiper operation commences.

The AND gate 15 also receives an inverted signal as derived from comparator 12 via the inverter 4.

In operation the comparators 11 and 12 will provide respective negative and positive outputs if sufficient water is swept by a wiping action, causing a positive input at pin B of the counter 16 and at the next clock pulse from clock 18, the counter 6 will count up. After such an up count the decoder 17 will output negatively through pin 6 and positively through pin 7, changing the wiper rate from low to high speed.

Respective positive and negative outputs from comparators 11 and 12, as a result of a desired amount of water being swept by wiping action, will cause a positive input at pin A to inhibit the clock count and therefore prevent either up or down counts by the counter 16. Thus the wiper remains at whatever wiper rate it is set.

When both comparators 11 and 12 give negative outputs as a result of insufficient water being swept by a wiping action, then both inputs A and B of the up/down counter 16 will be negative, the clock count will continue and the counter 16 will count down on the next clock pulse. The decoder 7 will then output positively at pin 6 switching the wiper rate back to low speed. If both comparators 11 and 12 again output negative the next down count from counter 16 will result in a positive output at pin 5 of decoder 17 and the wiping system will go into intermittent mode with, for example, a two second delay between wiping cycles.

Where variable intermittent time delays are available the decoder 17 can be correspondingly programmed so as to provide counting up and down through the entire available wiping rates. Clearly, if counting down continues the system will end up on the slowest rate or completely stopped.

While the system shown in Figure 2 provides one hardware design for implementing an up/down counter based control system, other hardware solutions will clearly be available, including microprocessor based systems which may count up or down any number of steps, each cycle, dependent upon the magnitude as well as the sense difference between the signal from sensor 6 and the preset preferred range.

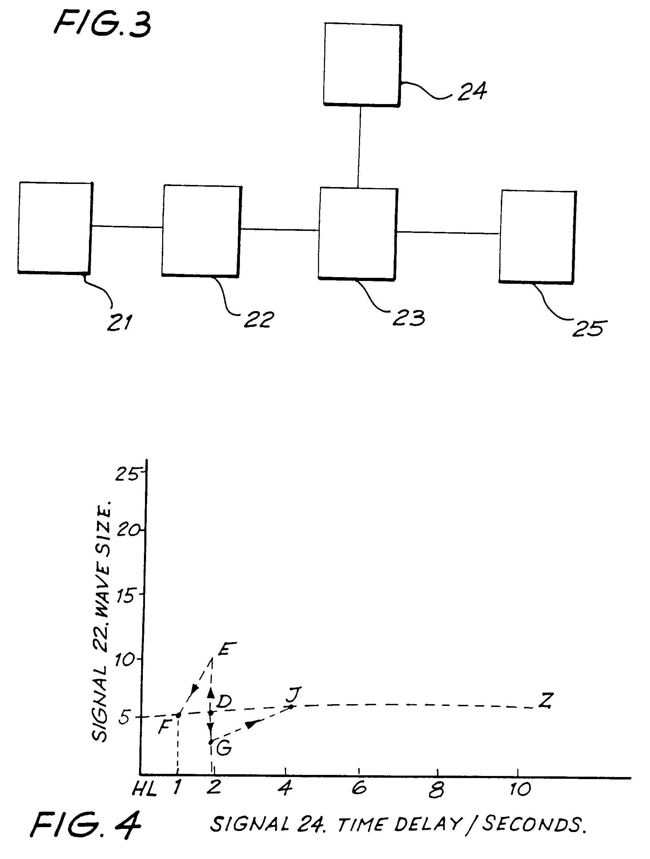

Figure 3 illustrates the logical steps of a programmed microprocessor which, in another embodiment of the invention, constitutes the automatic controller 7 shown in Figure 1. The sensor 21 records the water volume displaced by or the size of the water wave being swept in front of, the wiper blade 2 as it crosses the windscreen 1 for every wiping cycle. The signal produced by the sensor 21 can be continuously monitored with its maximum level for each wiping cycle recorded in a register and the minimum level recorded in another register. The minimum level will generally correspond to the substantially dry screen immediately after the blade 2 has passed the sensor 21. The difference of the two registers is calculated every wiping cycle and outputed from the signal converter 22. This operation makes allowances for variations due to component tolerances or heat etc. That signal is received by the central processor 23 which also receives a signal 24 defining the last used ("current") wiping action time delay. Thus the signal 24 is an inverse function of the true rate of wiping the windscreen.

By combining the information received from signals 22 and 24 the central processor 23 can determine what the wiper delay should be to bring the signal level 22 back to a predetermined optimum value.

In Figure 4, as seen in conjunction with Figure 3, input 24 into the processor 23 corresponds to the wiper time delay since the last wiping action, nominally indicated in seconds of delay between wiping actions and where H and L represent high and low speed continuous modes of operation. A second input, input 22, into the processor 23 relates to the wave size, or the amount of water swept off the screen by the wiper blade 2 during the last wiping action and is nominally represented on a scale 0-25, the signal being generally proportional to the quantity of water.

The processor 23 is programmed to seek to adjust the wiper delay 24, to bring the wave size 22 back to an optimum predetermined value Z. In Figure 4 the optimum wave size Z has a nominal value of 5. At point D the wiper delay 24 is 2 seconds. If the rain intensity doubles and therefore the wave size 22 on the next wiping action increases to point E with a nominal value 10, the processor 23 determines that the wave size 22 can be returned to its optimum value Z at point F if the wiper delay 24 is reduced to 1 second, hence doubling the wiping rate. Likewise with a reduction in wave size 22 from point D to point G would cause the processor 23 to adjust the wiper delay 24 from 2 seconds to 4 seconds bringing the wave size 22 from point G to point J.

These adjustments by the processor 23 are carried out prior to the next wiping cycle and fed to the wiper controller 25 to implement the action. The wiper delay 24 is checked and adjusted every wiping cycle to maintain where possible the preselected optimum wave size Z. These adjustments also include continuous low and high speed wiping rates, L and H respectively.

The processor 23 and controller 25 can be constructed and programmed in various ways in order to produce the described operating characteristics. For instance the devices may be microprocessors including "maps" to be looked up in accordance with the wave size and wiper rate inputs, the mapping locations providing the pre-programmed appropriate outputs. Alternatively the devices could be mathematically programmed to carry out predetermined algorithms in deriving the required outputs.

## Claims

1. A control means for a windscreen wiping system having variable wiping rates controlled by the control means, characterised in that the control means (7) sets a future wiping rate dependent upon a present wiping rate and a quantitative measure of the amount of moisture swept by a wiper blade (2) across the windscreen (1) during a current wiper action, the control means (7) having input means for receiving a signal from a moisture sensor (6), said signal corresponding to a moisture value indicative of said quantitative measure of moisture swept by the wiper blade (2), output means providing a control signal for a wiper motor control (4) which defines a future wiping rate according to a current wiping rate and the moisture value, processing means (21, 22, 23, 24, 25, 17) for determining the control signal by applying a current wiping rate value and the moisture value to pre-programmed data, wherein said pre-programmed data provides a control signal value predetermined to be appropriate for current absolute moisture accumulation rates and indexed by the current wiping rate value and the moisture value.

2. A control means as defined in claim 1 including a further input means for receiving a further signal providing the current wiping rate value indicative of the current rate of wiper action.

3. A control means as defined in claim 1 or 2 wherein the control signal is determined so that the moisture value is generally retained within a predetermined range of values.

4. A control means as defined in any one of claims 1-3 wherein the moisture sensor (6) is fixed on the inside of the vehicle windscreen (1) positioned within an area swept by the wiper blade (2) of the wiper system during each wiper action, said sensor (6) producing said moisture value signal indicative of the size of a water wave preceding the wiper blade (2) as it wipes moisture from the screen past said sensor (6).

5. A control means as defined in any one of the preceding claims further including retaining means (16) for retaining information indicating the current wiping rate for use in determining the control signal.

6. A control means as defined in claim 5 further including comparing means (11, 12) for comparing the moisture value to a predetermined value or range of values and providing a relative moisture value being a positive value, a negative value, or a zero value, and processing means for defining the control signal so as to set the future wiping rate to be greater than, less than or equal to the current wiping rate indicated by the retaining means (16) when said relative moisture value is positive, negative and zero respectively.

7. A control means as defined in claim 6, wherein the retaining means retaining information and the processing means are an up/down counter means (16) and associated decoder means (17).

8. A control means as defined in claim 6 or 7 wherein the relative moisture value further includes a quantity indicating the magnitude of the discrepancy between the predetermined value or range of values and the moisture value, and the control signal produces a future wiping rate varying from the present wiping rate in proportion to the magnitude of the discrepancy.

## Patentansprüche

1. Steuereinrichtung für eine Windschutzscheibenwischvorrichtung mit variablen Wischraten, welche gesteuert sind durch die Steuereinrichtung, dadurch gekennzeichnet, daß die Steuereinrichtung (7) eine zukünftige Wischrate einstellt, abhängig von einer derzeitigen Wischrate und einer quantitativen Messung der Feuchtigkeitsmenge, welcher durch ein Wischerblatt (2) über die Windschutzscheibe (1) während einer laufenden Wischerwirkung gewischt wird, wobei die Steuereinrichtung (7) aufweist eine Eingangseinrichtung zum empfangen eines Signales von einem Feuchtigkeitssensor (6), wobei das Signal einem Feuchtigkeitswert entspricht, welcher indikativ für die quantitative Messung der Feuchtigkeit ist, welche durch das Wischerblatt (2) gewischt ist, eine Ausgangseinrichtung, welche ein Steuersignal für eine Wischermotorsteuerung (4) bereitstellt, welches eine zukünftige Wischerrate gemäß einer laufenden Wischrate und dem Feuchtigkeitswert definiert, eine Verarbeitungseinrichtung (21, 22, 23, 24, 25, 17) zum Bestimmen des Steuersignales durch Anwenden eines laufenden Wischratenwertes und des Feuchtigkeitswertes auf vorprogrammierte Daten, wobei die vorprogrammierten Daten einen Steuersignalwert bereitstellen, welcher vorbestimmt ist, um geeignet zu sein für laufende absolute Feuchtigkeitssummenraten und indiziert ist durch den laufenden Wischratenwert und den Feuchtigkeitswert.

2. Steuereinrichtung nach Anspruch 1, umfassend eine weitere Eingangseinrichtung zum Empfangen eines weiteren Signales, welches den laufenden Wischratenwert bereitstellt, welcher indikativ für die laufende Rate der Wischerwirkung ist.

3. Steuereinrichtung nach Anspruch 1 oder 2, bei welcher das Steuersignal derart bestimmt ist, daß der Feuchtigkeitswert generell innerhalb eines vorbestimmten Wertebereiches gehalten wird.

4. Steuereinrichtung nach einem der Ansprüche 1 bis 3, bei welcher der Feuchtigkeitssensor (6) an der Innenseite der Fahrzeugwindschutzscheibe (1) befestigt ist, angeordnet innerhalb eines Bereiches, welcher durch das Wischerblatt (2) der Wischervorrichtung während jeder Wischerwirkung überstrichen wird, wobei der Sensor (6) das Feuchtigkeitswertsignal erzeugt, welches indikativ für die Größe einer Wasserwelle ist, welche dem Wischerblatt (2) vorausgeht, wenn dieser Feuchtigkeit von der Scheibe hinter dem Sensor (6) wischt.

5. Steuereinrichtung nach einem der vorangegangenen Ansprüche, desweiteren umfassend eine Rückhalteeinrichtung (16), zum Zurückhalten von Information, welche die laufende Wischrate angibt, zur Verwendung beim Bestimmen des Steuersignales.

6. Steuereinrichtung nach Anspruch 5, desweiteren umfassend eine Vergleichseinrichtung (11, 12) zum Vergleichen des Feuchtigkeitswertes mit einem vorbestimmten Wert bzw. Wertebereich und zum Bereitstellen eines relativen Feuchtigkeitswertes, welcher ein positiver Wert, ein negativer Wert oder ein Nullwert ist, und eine Verarbeitungseinrichtung zum Definieren des Steuersignales, so daR die zukünftige Wischrate eingestellt wird auf größer als, kleiner als oder gleich der laufenden Wischrate, welche angegeben ist durch die Rückhalteeinrichtung (16), wenn der relative Feuchtigkeitswert positiv, negativ bzw. Null ist.

7. Steuereinrichtung nach Anspruch 6, bei welcher die Rückhalteeinrichtung Informationen zurückhält und die Verarbeitungseinrichtung eine Hoch-/Nieder-Zähleinrichtung (16) und eine zugeordnete Decodereinrichtung (17) ist.

8. Steuereinrichtung nach Anspruch 6 oder 7, bei welcher der relative Feuchtigkeitswert eine Größe enthält, welche die Größe der Diskrepanz zwischen dem vorbestimmten Wert bzw. Wertebereich und dem Feuchtigkeitswert enthält, wobei das Steuersignal eine zukünftige Wischrate erzeugt, welche sich von der derzeitigen Wischrate proportional zu der Größe der Diskrepanz verändert.

## Revendications

1. Moyen de commande de système d'essuie-glace ayant des vitesses de balayage variables déterminées par le moyen de commande, caractérisé en ce que le moyen de commande (7) définit une future vitesse de balayage en fonction d'une vitesse de balayage actuelle et d'une mesure quantitative de la quantité d'humidité balayée par un balai d'essuie-glace (2) en travers du pare-brise (1) pendant une action actuelle de l'essuie-glace, le moyen de commande (7) ayant un moyen d'entrée pour recevoir un signal émanant d'un détecteur d'humidité (6), ledit signal correspondant à une valeur d'humidité indicative de ladite mesure quantitative d'humidité balayée par le balai d'essuie-glace (2), un moyen de sortie fournissant un signal de commande pour une commande de moteur d'essuie-glace (4) qui définit une future vitesse de balayage en fonction d'une vitesse de balayage actuelle et de la valeur d'humidité, des moyens de traitement (21, 22, 23, 24, 25, 17) pour déterminer le signal de commande en appliquant une valeur de vitesse de balayage actuelle et la valeur d'humidité à des données pré-programmées, où lesdites données pré-programmées fournissent une valeur de signal de commande prédéterminée pour être appropriée aux vitesses d'accumulation d'humidité absolues et indexée par la valeur de vitesse de balayage actuelle et la valeur d'humidité.

2. Moyen de commande selon la définition de la revendication 1 comprenant un autre moyen d'entrée pour recevoir un autre signal fournissant la valeur de vitesse de balayage actuelle indicative de la vitesse actuelle de l'action de l'essuie-glace.

3. Moyen de commande selon la définition de la revendication 1 ou 2, dans lequel le signal de commande est déterminé de telle sorte que la valeur d'humidité soit généralement retenue dans une gamme de valeurs prédéterminée.

4. Moyen de commande selon la définition de l'une quelconque des revendications 1-3, dans lequel le détecteur d'humidité (6) est fixé à l'intérieur du pare-brise du véhicule (1), positionné dans une zone balayée par le balai d'essuie-glace (2) dudit système d'essuie-glace pendant chaque action de l'essuie-glace, ledit détecteur (6) produisant ledit signal de valeur d'humidité indicatif de la taille de la vague d'eau précédant le balai d'essuie-glace (2) tandis qu'il balaie l'humidité du pare-brise devant ledit détecteur (6).

5. Moyen de commande selon l'une quelconque des revendications précédentes comprenant en outre un moyen de retenue (16) pour retenir les informations indiquant la vitesse de balayage actuelle qui seront utilisées dans la détermination du signal de commande.

6. Moyen de commande selon la définition de la revendication 5 comprenant en outre un moyen de comparaison (11, 12) pour comparer la valeur d'humidité à une valeur ou gamme de valeurs prédéterminée et fournissant une valeur d'humidité relative qui est une valeur positive, une valeur négative ou une valeur nulle, et un moyen de traitement pour définir le signal de commande de manière à déterminer si la future vitesse de balayage doit être supérieure, inférieure ou égale à la vitesse de balayage actuelle indiquée par le moyen de retenue (16) lorsque ladite valeur d'humidité relative est positive, négative et nulle, respectivement.

7. Moyen de commande selon la définition de la revendication 6, où le moyen de retenue qui retient les informations et le moyen de traitement sont un moyen compteur/décompteur (16) et un moyen décodeur connexe (17).

8. Moyen de commande selon la définition de la revendication 6 ou 7 dans lequel la valeur d'humidité relative comprend en outre une quantité indiquant la grandeur de la différence entre la valeur ou gamme de valeurs prédéterminée et la valeur d'humidité, et où le signal de commande produit une future vitesse de balayage variant par rapport à la vitesse de balayage actuelle proportionnellement à la grandeur de la différence.
